# EUROPÄISCHE PATENTSCHRIFT

(11) **EP 0 975 498 B1**
(45) Veröffentlichungstag und Bekanntmachung des Hinweises auf die Patenterteilung: **27.02.2002**
(21) Anmeldenummer: 98966637.5
(22) Anmeldetag: 17.12.1998
(51) Int. Cl.: B60T 7/10, B60T 13/74

(54) **FESTSTELLBREMSANLAGE FÜR FAHRZEUGE**
HAND BRAKE SYSTEM FOR VEHICLES
SYSTEME DE FREIN DE STATIONNEMENT POUR VEHICULES

(30) Priorität: 17.12.1997 DE 19755933
(43) Veröffentlichungstag der Anmeldung: 02.02.2000
(73) Patentinhaber: KÜSTER & Co. GmbH, 35630 Ehringshausen (DE)
(72) Erfinder: GUTIERREZ, Carmelo, D-35630 Ehringshausen (DE); SCHMIDT, Thomas, D-35410 Hungen (DE); SELL, Rainer, D-35584 Wetzlar (DE)
(74) Vertreter: Müller, Eckhard, Dr.
(86) Internationale Anmeldenummer: EP9808283
(87) Internationale Veröffentlichungsnummer: WO9930939

(56) Entgegenhaltungen:
- EP-A- 0 710 595

## Beschreibung

Die Erfindung betrifft eine Feststellbremsanlage für Fahrzeuge, insbesondere Personenkraftwagen, zum Anziehen oder Lösen wenigstens eines Betätigungszuges einer Bremseinrichtung mit einer einen motorischen Antrieb aufweisenden Stelleinheit zum Verstellen des Betätigungszuges und mit einer Löseeinrichtung, mit der die Verbindung zwischen der Stelleinheit und dem Betätigungszug lösbar ist.

Eine derartige Feststellbremse für Fahrzeuges ist bereits aus der EP 0 710 595 A1 bekannt. Im einzelnen weist diese Feststellbremsanlage einen motorischen Antrieb für eine Stelleinheit zum Anziehen oder Lösen wenigstens eines Betätigungszuges einer Bremseinrichtung des Fahrzeuges auf. Der Antrieb steht mit einem, um eine Längsachse drehbar und bzgl. der Längsachse unverschiebbar gelagerten Bauteil in Antriebsverbindung. Das Bauteil ist mit einer in Richtung der Längsachse verschiebbar angeordneten Teleskopvorrichtung drehfest gekoppelt, wobei die axiale Länge der Teleskopvorrichtung in Abhängigkeit von der Drehrichtung des Bauteils vergrößert oder verringert wird und die axialen Enden der Teleskopvorrichtung jeweils mit einem Betätigungszug für eine Bremse der Bremseinrichtung mittelbar oder unmittelbar verbunden sind. Bei der bekannten Feststellbremsanlage ist außerhalb des Gehäuses der Stelleinheit ein mittels eines Kabels entfernbares Plättchen vorgesehen, an dem sich der Außenschlauch des Betätigungszuges abstützt. Der Innenzug des Betätigungszuges ist dabei mit einem freien Ende der Teleskopeinrichtung verbunden. Im Fall, daß eine Störung an dem Antrieb oder der elektronischen Steuerung auftritt, können die angezogenen Bremsen dadurch gelöst werden, daß das Plättchen aus seiner Position entfernt wird, so daß der Außenmantel des Betätigungszuges infolge des Fehlens eines Widerlagers durch eine in dem Gehäuse der Stelleinrichtung vorgesehene Öffnung in das Innere des Gehäuses eintritt. Infolge dieser Maßnahme kann zwar die Bremse wieder gelöst werden, doch ist die gesamte Feststellbremsanlage nach Entfernen des Plättchens funktionsunfähig. Auch ist es nach Entfernen des Plättchens nicht ohne weiteres für den Fahrer des mit der Feststellbremsanlage ausgerüsteten Fahrzeuges möglich, den ursprünglichen Zustand wieder herzustellen. In der Regel muß der mit der Feststellbremsanlage ausgerüsteter Wagen nach Entfernen des Plättchens in eine Reparaturwerkstatt gebracht werden, um den ursprünglichen Zustand der Feststellbremsanlage wieder herzustellen. Ebenso besteht das Problem, daß beispielsweise bei einem Ausbau der Bordbatterie des Fahrzeuges die Feststellbremsanlage nicht betätigt werden kann. Für den Fall, daß die Bremsen der Feststellbremsanlage angezogen sind, kann zwar durch Entfernen des Plättchens bei der bekannten Feststellbremsanlage die Bremse gelöst werden, doch sind nach dem Wiedereinbau der Bordbatterie zusätzliche Handgriffe und Maßnahmen erforderlich, um die Feststellbremsanlage wieder in Gang zu setzen.

Demgegenüber liegt der vorliegenden Erfindung die Aufgabe zugrunde, eine Feststellbremsanlage mit den eingangs genannten Merkmalen dahingehend weiterzubilden, daß ein Lösen der angezogenen Bremsen der Feststellbremsanlage ohne Inbetriebnahme des Antriebes der Stelleinheit ermöglicht ist und die Feststellbremsanlage anschließend ohne weitere Maßnahmen betriebsbereit ist.

Diese Aufgabe wird nach der Erfindung bei Feststellbremsanlagen mit den eingangs genannten Merkmalen im wesentlichen dadurch gelöst, daß die Verbindung zwischen Stelleinheit und Betätigungszug selbsttätig, durch den motorischen Antrieb wieder herstellbar ist. Hierdurch wird in vorteilhafterweise erreicht, daß die angezogenen Bremsen der Feststellbremsanlage ohne weiteres mittels der Löseeinrichtung ohne Inbetriebnahme des Antriebes der Stelleinrichtung gelöst werden können, wobei anschließend die Verbindung zwischen der Stelleinheit und dem Betätigungszug selbsttätig wieder herstellbar ist. Hierdurch wird von Vorteil beispielsweise bei einer Fehlbedienung der Löseeinrichtung beziehungsweise bei einem vorübergehenden Ausfall des Antriebes beziehungsweise einem Ausbau der Bordbatterie des Kraftfahrzeuges erreicht, daß nach Betätigung der Löseeinrichtung anschließend die Feststellbremsanlage ohne weitergehende zusätzliche Maßnahmen wieder betriebsbereit ist, da nach einem Lösen der Verbindung zwischen der Stelleinheit und dem Betätigungszug mittels der Löseeinrichtung diese Verbindung wieder selbsttätig mittels der Stelleinrichtung herstellbar ist.

Dabei hat es sich nach einer ersten Ausgestaltung der Erfindung als vorteilhaft erwiesen, daß die Löseeinrichtung eine mit einem Bolzen, Zapfen oder dergleichen zusammenwirkende beziehungsweise in eine Aufnahme eingreifende Sperrklinke aufweist. Befindet sich die Sperrklinke in Verriegelungsstellung, kann die gesamte Stelleinheit als mechanisch starre Einheit betrachtet werden, wobei der Abstand der freien Enden der Stelleinheit lediglich durch den motorischen Antrieb bestimmt wird. Wird jedoch die Sperrklinke aus der Verriegelungsstellung in eine Entriegelungsstellung überführt, ist diese starre Verbindung aufgehoben, so daß die Stelleinheit sich unabhängig von einer Betätigung des motorischen Antriebes aufgrund der auf die Stelleinheit wirkenden Federkräfte der Bremsen selbsttätig längen kann, wodurch die Bremsen des Fahrzeuges gelöst werden.

Von Vorteil ist die Sperrklinke mittels eines Betätigungszuges in die Entriegelungsstellung überführbar. Dabei wird dieser Betätigungszug bevorzugt von Lenker des Fahrzeuges im Falle einer Störung der Feststellbremsanlage beziehungsweise Funktionsunfähigkeit zum Lösen der angezogenen Bremsen betätigt.

Besonders vorteilhaft erweist sich auch die Maßnahme, daß nach dem Lösen der Löseeinrichtung die Verbindung zwischen der Stelleinheit und dem Betätigungszug durch Betätigung des motorischen Antriebes wieder herstellbar ist. In diesem Fall wird die Sperrklinke mittels des Antriebes wieder in Richtung des Bolzens, Zapfens oder dergleichen verfahren, bis die Sperrklinke an dem Bolzen, Zapfen beziehungsweise einer Aufnahme einrastet und eine Verbindung zwischen der Stelleinrichtung und dem Betätigungszug wieder herstellt:.

Von Vorteil ist der Betätigungszug an dem Bolzen oder dergleichen angelenkt.

Weiterhin hat es sich als vorteilhaft erwiesen, daß die Sperrklinke insbesondere mittels einer Feder in Verriegelungsstellung vorgespannt ist. Hierdurch wird ein unbeabsichtigtes Betätigen der Löseeinrichtung weitestgehend vermieden.

Schließlich erweist es sich als vorteilhaft, daß in die Stelleinheit ein Kraftsensor integriert ist, der an eine Steuerung der Stelleinheit angeschlossen ist. Aufgrund dieser Maßnahme besteht die Möglichkeit, unzulässige Betriebszustände der Feststellbremsanlage zu detektieren und entsprechende Maßnahmen einzuleiten.

Weitere Ziele, Vorteile, Merkmale und Anwendungsmöglichkeiten der vorliegenden Erfindung ergeben sich aus der nachfolgenden Beschreibung des Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in schematischer Ansicht einen Personenkraftwagen mit einem Einbau der erfindungsgemäßen Feststellbremsanlage,
- Figur 2: eine perspektivische Ansicht eines Ausführungsbeispiels der erfindungsgemäßen Feststellbremsanlage mit teilweise nicht dargestelltem Gehäuse, wobei die Betätigungszüge gelöst sind,
- Figur 2a: die Löseeinrichtung der Figur 2 im verriegelten Zustand,
- Figur 3: die Feststellbremsanlage der Figur 2, wobei die Betätigungszüge und damit die Bremsen durch Verkürzung der Teleskopeinrichtung angezogen sind,
- Figur 3a: die Löseeinrichtung im verriegelten Zustand,
- Figur 4: die Feststellbremsanlage der Figur 3, wobei der Entriegelungshebel für die Löseeinrichtung betätigt wird,
- Figur 4a: die Löseeinrichtung während des Entriegelungsvorganges,
- Figur 5: die Feststellbremsanlage der Figur 4 mit entriegelter Löseeinrichtung,
- Figur 5a: die Löseeinrichtung im völlig entriegelten Zustand und
- Figur 6: ein weiteres Ausführungsbeispiel der erfindungsgemäßen Feststellbremsanlage, wobei die Welle zwei Spindeln mit entgegengesetzter Gewindesteigung aufnimmt.

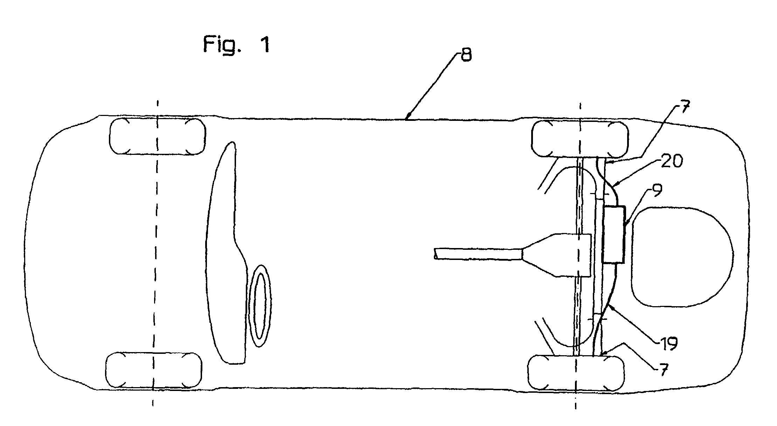

In Figur 1 ist der Einbauort der Feststellbremsanlage gemäß der vorliegenden Erfindung in einem Personenkraftwagen 8 näher dargestellt. Die Stelleinheit 9 ist im Bereich der Hinterachse des Personenkraftwagens 8 befestigt, wobei die beiden Betätigungszüge 18, 19 zur Betätigung der beiden Bremsen der Bremseinrichtung 7 der Hinterräder dienen.

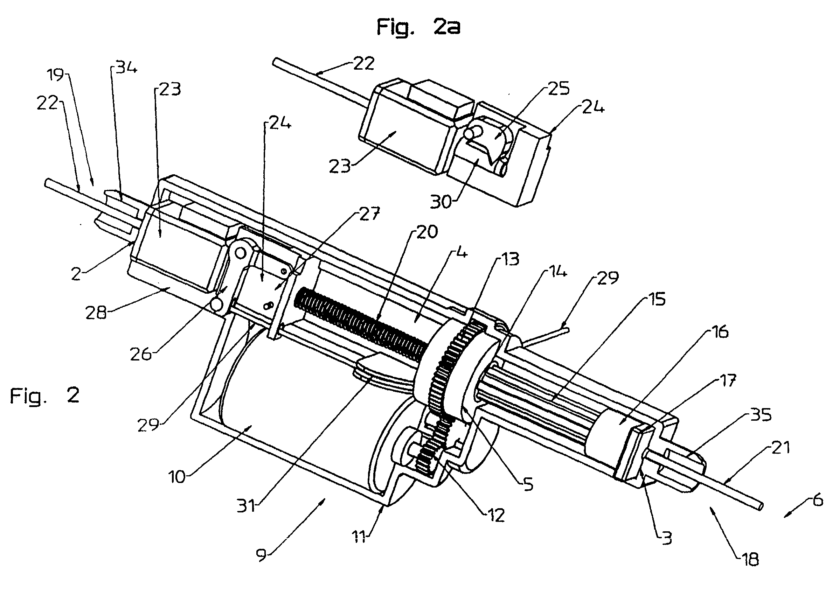

In Figur 2 ist die Stelleinheit 9 im Detail und bei gelöster Feststellbremse dargestellt. Die Stelleinheit 9 weist ein Gehäuse 11 auf, in dem neben einem motorischen Antrieb 10 und einem Getriebe 12 ein als Zahnrad 13 ausgebildetes Bauteil 5 angeordnet ist. Das Zahnrad 13 besitzt eine Keilnarbe 14 und ist in dem Gehäuse 11 um eine Längsachse 6 drehbar aber bzgl. der Längsachse 6 unverschiebbar gelagert. Das Bauteil 5 wirkt mit einer Teleskopvorrichtung 4, die ein erstes axiales Ende 2 und ein zweites axiales Ende 3 aufweist, zusammen. Wird das Bauteil 5 durch den motorischen Antrieb 10 in Drehung versetzt, dreht sich die Teleskopvorrichtung 4 mit, da diese drehfest mit dem Bauteil 5 gekoppelt ist. Allerdings ist die Teleskopvorrichtung 4 bzgl. der Längsachse 6 verschieblich in dem Bauteil 5 gelagert. Die Teleskopvorrichtung 4 wird durch eine Keilwelle 15 und eine Spindel 20 gebildet. Hierzu ist die Keilwelle 15 als Hohlwelle mit einem Innengewinde ausgebildet, welches mit der Spindel 20 zusammenwirkt. Das freie axiale Ende 3 der Keilwelle 15 weist ein Lager 16 mit einer Verdrehsicherung 17 für einen Innenzug 21 eines Betätigungszuges 18 für die erste Bremse auf. Bei einer Verdrehung des Zahnrades 13 und dem damit einhergehenden Verdrehen der Keilwelle 15 um die Längsachse 6 schraubt sich die Spindel 20 je nach Drehrichtung entweder in die Keilwelle 15 hinein oder aus ihr heraus. An dem gegenüberliegenden freien axialen Ende 2 der Spindel 20 ist der weitere Innenzug 22 des zweiten Betätigungszuges 19 befestigt. Bei Betätigung des motorischen Antriebes 10 und Verdrehen des Zahnrades 13 kommt es somit je nach Drehrichtung zu einer teleskopartigen Verkürzung beziehungsweise Verlängerung der Teleskopvorrichtung 4, insbesondere der Spindel 20 und der Keilwelle 15, mit der Folge eines Schließens oder Öffnens der beiden Bremsen über die Innenzüge 21 und 22. Die beiden freien axialen Enden 2 und 3 der Teleskopvorrichtung 4 sind somit jeweils mit einem der Innenzüge 21, 22 der Betätigungszüge 18, 19 verbunden. Die Außenmäntel dieser Betätigungszüge 18, 19 sind in endseitigen axialen Aufnahmen 34, 35 des Gehäuses 11 der Feststellbremsanlage aufgenommen.

Wesentlich für die Ausgestaltung des Ausführungsbeispiels ist die Maßnahme, daß die Teleskopvorrichtung 4 beziehungsweise die Keilwelle 15 in der Aufnahme des Bauteils 5, insbesondere der Keilnarbe 14 des Zahnrades, 13 axial frei verschiebbar aufgenommen ist. Hierdurch ist die Teleskopvorrichtung 4 innerhalb des Gehäuses 11 schwimmend gelagert. Durch diese Ausgleichswirkung wird zum einen eine gleichmäßige Beaufschlagung der beiden Bremsen gewährleistet, zum anderen wird das Gehäuse 11 der Feststellbremsanlage nicht mit der gesamten, auf die Bremsbacken wirkenden Kraft beaufschlagt, sondern allenfalls mit einer ggf. vorhandenen Differenzkraft zwischen den Betätigungskräften der beiden Bremsen.

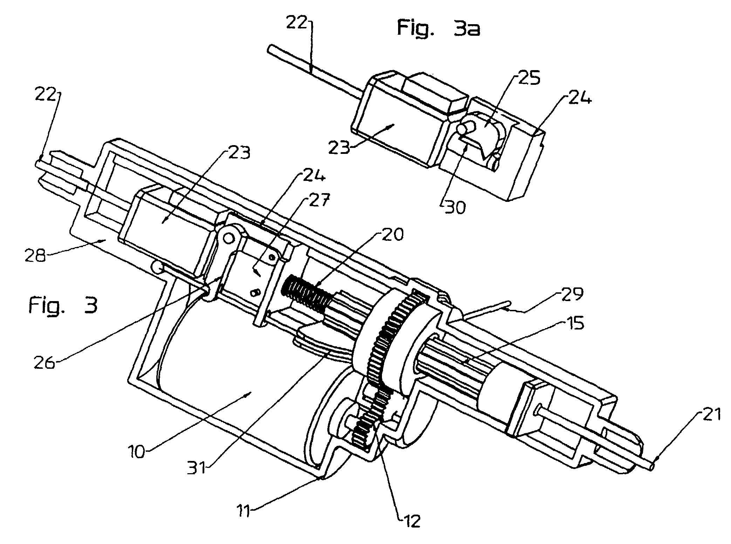

In Figur 3 ist die Feststellbremsanlage der Figur 2 mit nun verkürzter Teleskopvorrichtung 4 dargestellt, wobei die Bremsen in den geschlossenen beziehungsweise angezogenen Zustand überführt sind. Deutlich ist erkennbar, daß die Keilwelle 15 beziehungsweise die Teleskopvorrichtung 4 in Bezug auf das Bauteil 5 beziehungsweise Zahnrad 13 eine andere axiale Positionierung einnimmt. Dies ist beispielsweise auf unterschiedlichen Verschleiß der beiden zu betätigenden Bremsen beziehungsweise eine Kompensation von Längenunterschieden bei den Innenzügen 21, 22 zurückzuführen.

Wie aus den Zeichnungen ersichtlich, ist in die Teleskopvorrichtung 4 ein Kraftsensor 23 integriert. Diese alternative Maßnahme hat den Vorteil, daß im Falle des Auftretens sehr hoher Zugkräfte, die einen bestimmten zulässigen Grenzwert überschreiten, mittels des Kraftsensors beispielsweise die Stelleinheit 9 oder der motorische Antrieb 10 abgeschaltet werden kann, um eine Beschädigung der Bremsen beziehungsweise der Betätigungszüge 18, 19 zu vermeiden.

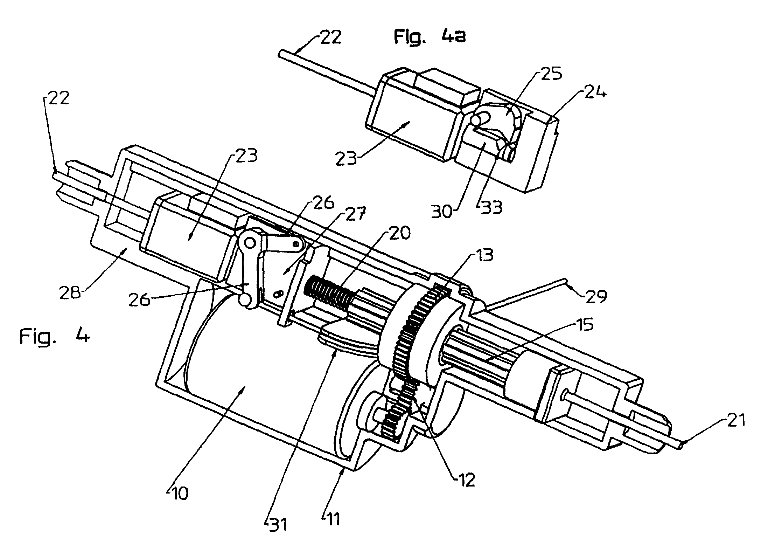

Nach einer besonders vorteilhaften, eigenständigen Ausgestaltung der Erfindung ist in die Teleskopvorrichtung 4 eine Löseeinrichtung 24 integriert. Diese bevorzugt mechanisch betätigbare Löseeinrichtung 24 dient dazu, im Falle einer Störung, beispielsweise eines Ausfalls des motorischen Antriebes 10 und angezogener Feststellbremse die mechanische Verbindung der axialen Enden 2 und 3 der Teleskopeinrichtung 4 voneinander zu lösen. Wie den Figuren zu entnehmen ist, besteht diese Löseeinrichtung 24 aus einer Sperrklinke 25, die von einem federbelasteten Entriegelungshebel 26 betätigbar ist. Bei Betätigung des Entriegelungshebels 26 wird die feste mechanische Verbindung zwischen den freien axialen Enden 2 und 3 der Teleskopvorrichtung 4 gelöst. Die Löseeinrichtung 24 ist mittels der Feder 27 in der Verrieglungsstellung gehalten. Eine Entriegelung kann durch Betätigung des Betätigungszuges 29 erreicht werden, wodurch der Entriegelungshebel 26 in eine Entriegelungsstellung verschwenkt wird. Dieser Zustand ist der Figur 4, 4a zu entnehmen. Insbesondere aus Figur 4a ist ersichtlich, daß in dem Entriegelungszustand die Sperrklinke 25 nicht mehr in die Aufnahme 33 des Bolzens 30 eintaucht, welcher im vorliegenden Ausführungsbeispiel am Kraftsensor 23 angeordnet ist. Natürlich besteht auch die Möglichkeit, den Innenzug 22 unmittelbar an dem Bolzen 30 anzulenken. Um den Betätigungszug 29 für die Löseeinrichtung 24 auf Spannung zu halten, ist das Ende des Betätigungszuges 29 mittels einer Feder 28 am Gehäuse 11 der Feststellbremsanlage angelenkt. Über eine Umlenkung 31 ist dieser Betätigungszug 29 aus dem Gehäuse 11 heraus geführt.

Im Falle einer Fehlbedienung der mechanischen Entriegelung ist es in einfacher Weise möglich, die Feststellbremsanlage wieder gangbar zu machen. Hierfür wird der motorische Antrieb 10 in Betrieb gesetzt, so daß sich das freie Ende der Keilwelle 15 an dem Gehäuse 11 abstützt und die Gewindespindel 20 in Richtung des Bolzens verschoben wird, bis die Sperrklinke 25 in die Aufnahme 33 des Bolzens 30 einschnappt.

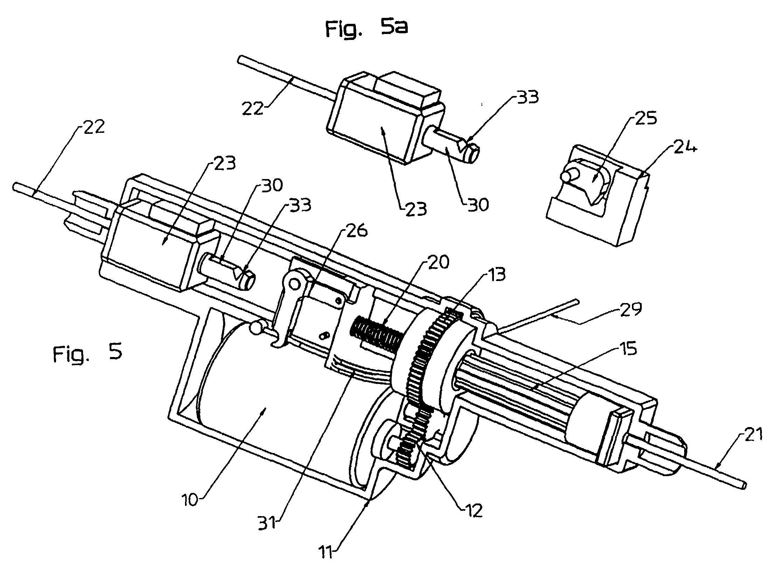

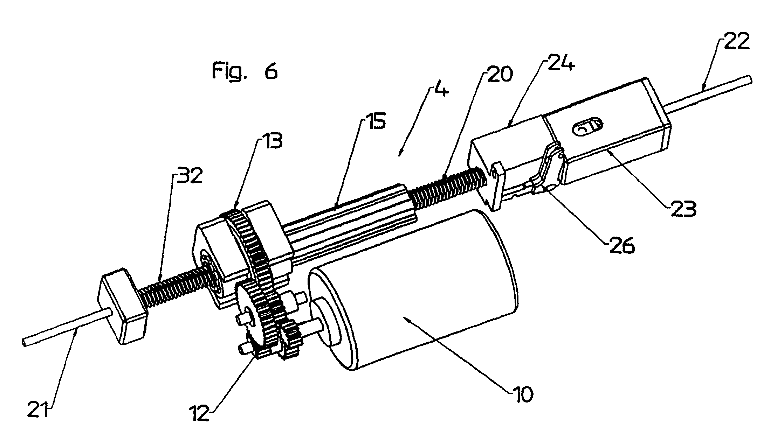

Gemäß dem weiteren Ausführungsbeispiel der Figur 6 können auch zwei Spindeln 20, 32 in der Bohrung der Keilwelle 15 aufgenommen sein. Dabei weisen die beiden Spindeln 20, 32, Gewindestangen eine entgegengesetzte Gewindesteigung auf. In diesem Fall sind die Innenzüge 21, 22 entweder mittelbar oder unmittelbar an den freien Enden der Spindeln 20, 32 angelenkt. Die prinzipielle Funktionsweise der Feststellbremsanlage nach diesem Ausführungsbeispiel der Figur 6 ist ansonsten vergleichbar zu dem Ausführungsbeispiel der Figuren 2 bis 5.

### Bezugszeichenliste

- 2: axiales Ende
- 3: axiales Ende
- 4: Teleskopvorrichtung
- 5: Bauteil
- 6: Längsachse
- 7: Bremseinrichtung
- 8: Personenkraftwagen
- 9: Stelleinheit
- 10: motorischer Antrieb
- 11: Gehäuse
- 12: Getriebe
- 13: Zahnrad
- 14: Keilnarbe
- 15: Keilwelle
- 16: Lager Verdrehsicherung
- 17: Verdrehsicherung
- 18: Betätigungszug
- 19: Betätigungszug
- 20: Spindel
- 21: Innenzug
- 22: Innenzug
- 23: Kraftsensor
- 24: mechanische Löseeinrichtung
- 25: Sperrklinke
- 26: Entriegelungshebel
- 27: Feder
- 28: Feder
- 29: Betätigungszug
- 30: Bolzen
- 31: Umklenkung
- 32: Spindel
- 33: Aufnahme
- 34: Aufnahme
- 35: Aufnahme

## Patentansprüche

1. Feststellbremsanlage für Fahrzeuge, insbesondere Personenkraftwagen (8), zum Anziehen oder Lösen wenigstens eines Betätigungszuges (18, 19) einer Bremseinrichtung (7) mit einer einen motorischen Antrieb (10) aufweisenden Stelleinheit (9) zum Verstellen des Betätigungszuges (18, 19) und mit einer Löseeinrichtung (24), mit der die Verbindung zwischen der Stelleinheit (9) und dem Betätigungszug (18, 19) lösbar ist, **dadurch gekennzeichnet, daß** die Verbindung zwischen Stelleinheit (9) und Betätigungszug (18, 19) selbsttätig durch den motorischen Antrieb (10) wieder herstellbar ist.

2. Feststellbremsanlage nach Anspruch 1, **dadurch gekennzeichnet, daß** die Löseeinrichtung (24) eine mit einem Bolzen (30), Zapfen oder dergleichen zusammenwirkende beziehungsweise in eine Aufnahme (33) eingreifende Sperrklinke (25) aufweist.

3. Feststellbremsanlage nach Anspruch 2, **dadurch gekennzeichnet, daß** die Sperrklinke (25) mittels eines Betätigungszuges (29) in die Entriegelungsstellung überführbar ist.

4. Festellbremsanlage nach einem der vorhergehenden Ansprüche, **dadurch gekennzeichnet, daß** nach dem Lösen der Löseeinrichtung (24) durch Betätigung des motorischen Antriebes (10) die Verbindung zwischen der Stelleinheit (9) und dem Betätigungszug (18, 19) wieder herstellbar ist.

5. Festellbremsanlage nach einem der Ansprüche 2 bis 4, **dadurch gekennzeichnet, daß** der Betätigungszug (18, 19) an dem Bolzen (30) oder dergleichen angelenkt ist.

6. Festellbremsanlage nach einem der Ansprüche 2 bis 5, **dadurch gekennzeichnet, daß** die Sperrklinke (25) insbesondere mittels einer Feder (27) in Verriegelungsstellung vorgespannt ist.

7. Festellbremsanlage nach einem der vorhergehenden Ansprüche, **dadurch gekennzeichnet, daß** in die Stelleinheit (9) ein Kraftsensor (23) integriert ist, der an eine Steuerung der Stelleinheit (9) angeschlossen ist.

8. Feststellbremsanlage nach einem der vorhergehenden Ansprüche, **dadurch gekennzeichnet, daß** die Löseeinrichtung (24) in die Stelleinheit (9) integriert ist.

## Claims

1. Parking brake installation for vehicles, especially passenger vehicles (8), for pulling on or releasing at least one actuating pull (18, 19) of a braking device (7), with a setting unit (9), which has a motorised drive (10), for adjusting the actuating pull (18, 19) and with a release device (24) by which the connection between the setting unit (9) and the actuating pull (18, 19) is releasable, **characterised in that** the connection between setting unit (9) and actuating pull (18, 19) can be automatically produced again by the motorised drive (10).

2. Parking brake installation according to claim 1, **characterised in that** the release device (24) comprises a pawl (25) co-operating with a bolt (30), pin or the like and engaging in, for example, a receptacle (33).

3. Parking brake installation according to claim 2, **characterised in that** the pawl (25) can be transferred into the unlocked setting by means of an actuating pull (29).

4. Parking brake installation according to one of the preceding claims, **characterised in that** after release of the release device (24) by actuation of the motorised drive (10) the connection between the setting unit (9) and the actuating pull (18, 19) can be produced again.

5. Parking brake installation according to one of claims 2 to 4, **characterised in that** the actuating pull (18, 19) is pivotably connected to the bolt (30) or the like.

6. Parking brake installation according to one of claims 2 to 5, **characterised in that** the pawl (25) is biassed into the locking setting, particularly by means of a spring (27).

7. Parking brake installation according to one of the preceding claims, **characterised in that** a force sensor (23), which is connected to a control of the setting unit (9), is integrated into the setting unit (9).

8. Parking brake installation according to one of the preceding claims, **characterised in that** the release device (24) is integrated into the setting unit (9).

## Revendications

1. Système de frein de stationnement pour véhicules, en particulier pour voiture de tourisme (8), destiné à serrer ou à desserrer au moins un câble de commande (18, 19) d'un dispositif de freinage (7) et comportant une unité de réglage (9) présentant un entraînement motorisé (10) destinée à régler le câble de commande (18, 19), et un dispositif de desserrage (24) grâce auquel la liaison entre l'unité de réglage (9) et le câble de commande (18, 19) peut être dégagée, **caractérisé en ce que** la liaison entre l'unité de réglage (9) et le câble de commande (18, 19) peut être à nouveau réalisée automatiquement par l'entraînement motorisé (10).

2. Système de frein de stationnement selon la revendication 1, **caractérisé en ce que** le dispositif de desserrage (24) présente un cliquet d'arrêt (25) agissant conjointement avec un boulon (30), un tourillon ou équivalent, ou s'engrenant dans un logement (33).

3. Système de frein de stationnement selon la revendication 2, **caractérisé en ce que** le cliquet d'arrêt (25) peut être transféré dans la position de déverrouillage au moyen d'un câble de commande (29).

4. Système de frein de stationnement selon l'une des revendications précédentes, **caractérisé en ce que**, suite au desserrage du dispositif de desserrage (24), la liaison entre l'unité de réglage (9) et le câble de commande (18, 19) peut être à nouveau réalisée par commande de l'entraînement motorisé (10).

5. Système de frein de stationnement selon l'une des revendications 2 à 4, **caractérisé en ce que** le câble de commande (18, 19) est articulé au niveau du boulon (30) ou équivalent.

6. Système de frein de stationnement selon l'une des revendications 2 à 5, **caractérisé en ce que** le cliquet d'arrêt (25) est précontraint dans la position de verrouillage, en particulier au moyen d'un ressort (27).

7. Système de frein de stationnement selon l'une des revendications précédentes, **caractérisé en ce qu'**un capteur de force (23) est intégré dans l'unité de réglage (9), lequel est relié à une commande de l'unité de réglage (9).

8. Système de frein de stationnement selon l'une des revendications précédentes, **caractérisé en ce que** le dispositif de desserrage (24) est intégré dans l'unité de réglage (9).
